Europäisches Patentamt

European Patent Office

Office européen des brevets

(19)

(11) Veröffentlichungsnummer: **0 243 791**
**B1**

(12) **EUROPÄISCHE PATENTSCHRIFT**

(45) Veröffentlichungstag der Patentschrift:
27.06.90

(21) Anmeldenummer: 87105539.8

(22) Anmeldetag: **14.04.87**

(51) Int. Cl.⁵: **F16J 15/40**, F16J 15/44

(54) **Dichtung zwischen rotierenden Maschinenteilen.**

(30) Priorität: **16.04.86 DE 3612877**

(43) Veröffentlichungstag der Anmeldung:
**04.11.87 Patentblatt 87/45**

(45) Bekanntmachung des Hinweises auf die Patenterteilung:
**27.06.90 Patentblatt 90/26**

(84) Benannte Vertragsstaaten:
**FR GB IT**

(56) Entgegenhaltungen:
**FR-A- 2 055 168**
**US-A- 3 971 563**
**US-A- 4 114 059**

(73) Patentinhaber: **MTU MOTOREN- UND TURBINEN-UNION MÜNCHEN GMBH, Dachauer Strasse 665 Postfach 50 06 40, D-8000 München 50(DE)**

(72) Erfinder: **Buckreus, Werner, Planeggerstrasse 17c, D-8035 Gauting(DE)**

**Beschreibung**

Die Erfindung bezieht sich auf eine Dichtung zwischen rotierenden Maschinenteilen mit einem Dichtring, der eine Welle derart umgibt, daß zwischen Welle und Ring ein enger Spalt gebildet ist, in dem sich im Betrieb ein tragfähiges Gaskissen ausbildet und der Dichtring in einem käfigartigen Teil freibeweglich angeordnet ist und unter Gasdruck gegen eine radiale Dichtfläche gedrückt wird.

Das technische Gebiet der Erfindung liegt bei Zwei- und Mehrwellenanordnungen von hochtourigen Turbomaschinen, die bei Triebwerken mit Gasturbine angewandt werden.

Bei bekannten Wellendichtungen wird häufig ein flüssiges Medium unter Druck in einen Dichtungsbereich eingeführt, um ein dynamisches Lagerverhalten zu erzielen. In der Regel herrscht dabei eine Druckdifferenz ($\Delta$ P) zwischen Umgebungsdruck $P_2$ und dem Druck des eingeführten Mediums $P_1$, wobei $\Delta$ P bedeutet, daß $P_1$ größer ist als $P_2$. Diese Druckdifferenz besteht meistens zwischen zwei Räumen, die in Achsrichtung hintereinander angeordnet sind. Eine Dichtung insbesondere für Wellenlager muß in der Lage sein, sowohl axiale als auch radiale Spalten und Toleranzen, wie sie sich im stationären als auch im instationären Betrieb der Maschine durch unerwünschte oder unkontrollierte Bewegungen, wie Schwingungen, ergeben, auszugleichen.

Die Forderung nach einer Dichtung, die derartige Toleranz zu überbrücken vermag, besteht bereits seit geraumer Zeit, jedoch ist sie im Turbo-Maschinenbau besonders schwer zu erfüllen, weil hier hohe Umfangsgeschwindigkeiten und hohe Temperaturen, Fliehkraftbelastungen, Schwingungen etc. zusammentreffen.

So sind z.B. Gleitringdichtungen bekannt, die bei Temperaturen bis etwa 500°C und bis zu Umfangsgeschwindigkeiten von etwa 80 – 100 m pro Sekunde einsetzbar sind. Meist kommen dabei für Trockenlauf geeignete Dichtungsmaterialien, wie Hartkohle, zum Einsatz (im Gegensatz zu einer Flüssigschmierung). Beispiele hierzu sind beispielsweise in der Europäischen Patentschrift 50 882 beschrieben. Hierbei sind Federn oder Faltenbälge notwendig, die den Einsatzbereich solcher Dichtungen erheblich einschränken. Gleitringdichtungen sind auch ungeeignet für höhere Drehzahlen.

Aus der US-PS 3 971 563 ist eine gattungsgemäße Dichtung auf der Grundlage des gasdynamischen Effektes bekannt geworden, bei der zwei Dichtringe mittels Federn voneinander weg gegen die Schenkel eines im Querschnitt U-förmigen Käfigs gedrückt werden. Der Käfig ist über Verstellmittel axial verschiebbar, wodurch in einer Welle und in dem Dichtring gegenüberliegende Nuten mehr oder minder übereinanderliegen und die Dichtfläche dadurch veränderbar ist. Hierdurch läßt sich ein etwa konstanter Gasfluß von externem Gaszufluß zur Niederdruckseite der Dichtung her erzielen, wodurch gleichmäßige Lagerkühlung unabhängig von Druckschwankungen der Hochdruckseite erzielbar ist. Ein Nachteil dieser Anordnung ist darin zu sehen, daß die Verwendung von Federn bei dieser Ausführung

1. aufwendig ist und
2. bei dem nicht ausschließbaren Bruch von Federelementen eine Zerstörung der Dichtung erfolgen kann. Ferner von Nachteil ist, daß diese Anordnung nur mittels eines aufwendigen externen Gaszuflusses funktionsfähig ist.

Aus der US-PS 3 001 806 ist eine Dichtanordnung bekannt geworden, bei der ein flexibler, gasdurchlässiger Dichtring außen von einem steifen Außenring umgeben ist und beide zusammen beweglich in einem Käfig angebracht sind. Dabei dient der steife Ring zur Formerhaltung des flexiblen Dichtringes im Betrieb. Ein Nachteil dieser und auch anderer Anordnungen besteht darin, daß zur Erzielung eines möglichst geringen Leckstromes im Betrieb der Dichtspalt zwischen Dichtring und abzudichtender Welle möglichst gering ausgeführt werden muß. Dies führt jedoch zu einem hohen Montageaufwand bzw. zur Gefahr der Beschädigung des Dichtringes bei der Montage.

Ausgehend von diesen bekannten Vorrichtungen ist es Aufgabe der vorliegenden Erfindung, einen Dichtring zu schaffen, der sich durch eine einfache Montierbarkeit bei im Betrieb geringstmöglichem Leckverhalten im Dichtspalt auszeichnet, wobei gleichzeitig das Gewicht der Dichtordnung soweit wie möglich reduziert werden soll.

Erfindungsgemäß wird die Aufgabe dadurch gelöst, daß der Dichtring einen außen aufgeschrumpften Metallring trägt und der Dichtring aus einem materialgleichen oder kleineren thermischen Ausdehnungskoeffizienten gewählt ist als dasjenige der Welle und des Metallringes.

Ein wesentlicher Vorteil der Erfindung ist es, daß sich durch die geschickte Werkstoffwahl der Paarung (Reib- oder Bewegungspartner) unter Berücksichtigung ihrer thermischen Ausdehnungskoeffizienten ein für die Montage günstiger, relativ großer Spalt einhalten läßt, dieser jedoch im Betrieb sozusagen selbstheilend wieder verkleinert wird. Bei der erfindungsgemäßen Lösung macht es auch nichts aus, daß durch den engen Spalt etwas Medium, wie Luft, austreten kann, denn hierdurch wird gleich zweierlei erreicht, daß nämlich auf der Austrittsseite fest oder flüllige Partikel gehindert werden, in den Spalt einzutreten, und daß mit der austretenden Luft Wärme abgeführt werden kann.

Der Vorteil des Metallringes mit einem geringeren thermischen Ausdehnungskoeffizienten besteht darin, daß bei höher werdenden Betriebstemperaturen zentripedal wirkende Kräfte auf den Dichtring einwirken und den axialen Dichtspalt vorteilhafterweise verkleinern.

Weitere Vorteile der Erfindung sind vor allem folgende:

Die neue Dichtung wird durch den Dichtring berührungslos zentriert und verhält sich wie ein aerostatisches/aerodynamisches Gaslager, insbesondere wie ein Luftlager, was bei hohen Temperaturen einsetzbar ist und trotz der hohen Drehzahlen eine äußerst geringe Reibung aufweist. Durch die Ausnutzung eines Gasschmiereffektes oder eines Luftkisseneffektes ist eine Mischreibungsphase etwa bei Anlauf einer rotierenden Maschine vernachlässigbar klein.

Besonders vorteilhaft bei der Erfindung ist ihr günstiges Wirkprinzip: je höher Drehzahl und Temperatur steigen, um so besser wird die Tragkraft des Luftkissens im Spalt, und der Spalt wird immer gleichmäßiger über den Umfang betrachtet. Die Belastung durch Fliehkräfte verhält sich dagegen umgekehrt proportional zur Drehzahl und Temperaturbelastung. Das tragende Luftkissen und -polster wird in an sich bekannter Weise aufgebaut durch die Verdrängerwirkung unter Wellenunwucht periodisch ausgelenkter Oberflächenbereiche und/oder durch ein Muster an Vertiefungen, wodurch sich Druckkeile ausbilden können, entgegen dem Überdruck $P_1$. Insgesamt gesehen, handelt es sich also hier um ein echtes gasdynamisches Verhalten, das durch die Schleppwirkung der bewegten Oberfläche einer Welle auf das Gas erzielt wird. Diese Wirkung ist ähnlich der einer Rotationsverdrängerpumpe oder eines entsprechenden Verdichters für ein Fluid, wie z.B. in der WO/DE 3 490 264 beschrieben.

Von Vorteil ist auch bei der erfindungsgemäßen Lösung, daß der Dichtring durch den Differenzdruck $\Delta P$ stirnseitig gegen eine Lauf- oder Anlagefläche des ihn umgebenden Teils, insbesondere des käfigartigen Teils angepreßt wird und sich eine Dichtwirkung ähnlich einer Gleitringdichtung im Stillstand ergibt. Die Anlage an der axialen Dichtfläche ist temporär und bestimmt sich durch das Reibmoment, in dessen Folge der Dichtring und der käfigartige Teil zusammen miteinander rotieren oder nicht. Die axiale Beweglichkeit des Dichtrings ist vorgeben in einem gewünschten Ausmaß, insbesondere durch die Dimensionierung des käfigartigen Teils und den Zwischenraum, den er dem Dichtring axial und auch radial läßt. Die radiale Dichtfläche ist gebildet durch die innere Oberfläche des Dichtringes, die zur zentralen Welle hin gerichtet ist, und diese Oberfläche kann glatt sein oder mit Vorteil mit den erwähnten Vertiefungen, z.B. nach Art eines Fischgrätenmusters. Die Vertiefungen werden in der Regel in das verschleißärmere Teil gelegt (Welle oder Dichtring).

Nicht zuletzt ist einer der wichtigsten Vorteile der Erfindung der, daß der Differenzdruck des Gases (Luft) Faltenbälge oder Federn und das diesen inhärente Schwingungsverhalten überflüssig macht. Axiale Relativbewegungen der Wellen können keine Reibung erzeugen.

Eine bevorzugte Anwendung der Erfindung liegt auf dem Gebiet der Flugtriebwerke, insbesondere bei Gasturbinen mit Zwei-und Mehr-Wellentriebwerken. Die Erfindung ist jedoch nicht auf diese Anwendung beschränkt, sie kann auch bei Wellenleistungsturbinen, wie Hubschraubertriebwerken angewandt werden oder auch stationär oder in Fahrzeugen oder Schiffen, ebenso bei anderen hochtourig umlaufenden Wellen von Antrieben und/oder Maschinen aller Art.

Fig. 1 zeigt einen Querschnitt einer Ausführung der Dichtung

Fig. 2 eine perspektivische Ansicht einer anderen Ausführung

Fig. 3 einen Querschnitt einer geteilten Ausführung

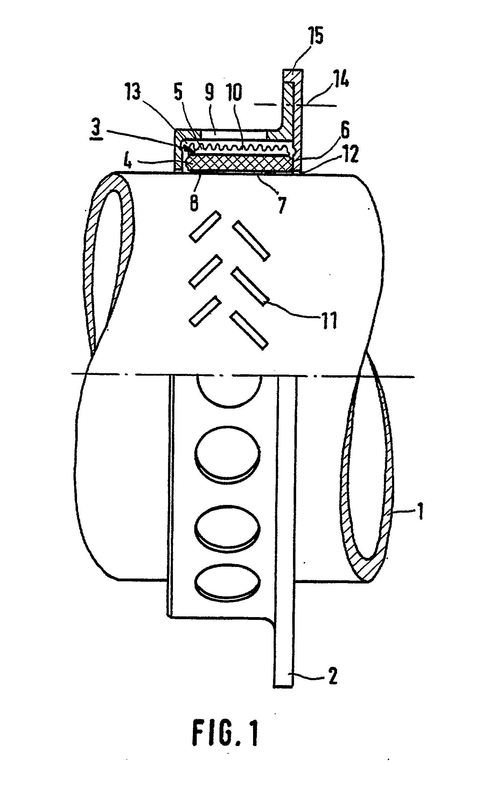

Die Erfindung ist in der Figur 1 rein schematisch dargestellt. Auf einer zentralen oder inneren Welle 1 (Hohlwelle) ist ein insbesondere drehbares Teil 2, die Welle 1 umfassend, angeordnet. Das Teil 2 ist käfigartig ausgebildet und enthält die neue Dichtung 3, welche zusammengesetzt ist aus einem inneren Ring wie Dichtring 4, aus Glas, Kohlenstoff, Kunststoff, Metall oder einem keramischen Werkstoff je nach Betriebstemperatur und einem äußeren Ring 5 als Mantel oder Außenverbund mit Teil 4 ausgebildet. Der Käfig 2 hält die Dichtung 4 in einem vorgegebenen Rahmen beweglich, d. h. so daß sie sich radial dehnen kann ohne am Käfig anzuliegen oder auch sich zusammenziehen kann ohne an der Welle 1 anzuliegen. Dabei ist die Dichtung so gehalten, daß ihre Dichtfläche 6 an eine Lauf- oder Anlagefläche im Käfig unter dem Druck von $P_1$ größer als $P_0$ anliegt wie der Pfeil in der Figur links oben zeigt. Diese axiale Anpreß- und Dichtfläche ist klein zu wählen, jedenfalls im Vergleich zur radialen Dichtfläche 7, an der sich in dem engen verbleibenden Spalt 12 das gas-dynamische Lagerungsverhalten ausbildet, ggf. unterstützt durch das Nuten- oder Taschenmuster 11 auf der Oberfläche der Welle 1. Es handelt sich dabei normalerweise um ein Gaslager oder ein Luftlager 8. Die Luft kann auch zur besseren Kühlung des Dichtringes benutzt werden. Hierzu sind vorteilhaft Kühlbohrungen 9 oder Schlitze, die am Umfang des käfigarten Teils 2 verteilt sind.

Diese Bohrungen oder Schlitze liegen gegenüber den Kühlrippen 10, Noppen oder dergleichen Elemente mit kleiner Masse und großer Oberfläche des Ringes 5, der mit Vorteil reibschlüssig vorgespannt ist. Die thermischen Ausdehnungskoeffizienten der Werkstoffe sind so gewählt, daß derjenige des Dichtrings 4 kleiner ist als derjenige der Welle 1, weil die Montage dadurch erleichtert wird, daß zu Anfang zwischen Dichtring und Welle eine größere Toleranz gewählt wird. Wie die Figur ferner zeigt, ist die Dichtung 3 in einem käfigartigen Teil 2 so untergebracht, daß ein Zwischenraum entsteht, der die axiale und radiale Beweglichkeit des Dichtrings in vorgegebenem gewünschtem Ausmaß sichert. Die aerostatischen und/oder aerodynamischen Effekte, die im Spalt zwischen Dichtring und Welle auftreten, können mit Vorteil unterstützt werden durch ein Fischgrätmuster 11, das eine Druckkomponente erzeugt, die dem Überdruck von $P_1$ entgegenwirkt. Der sich aufbauende Druckkeil ist dabei steuerbar, je nach dem Winkel, insbesonder je nach den gewähltenunterschiedlichen Winkeln der Vertiefungen im Fischgrätmuster auf der Oberflächee der Welle 1. Das käfigartige Teil 2 kann seinerseits über Schrauben 14 an dem Flansch 15 verbunden sein mit dem Endbereich einer äußeren Welle, wie Hohlwelle oder anderen Hohlwellen, z. B. in einem Mehrwellentriebwerk, oder sonstigen Antrieb oder Maschine.

Wie ferner aus der Zeichnung des Ausführungsbeispiels ersichtlich, wird mit Vorteil für die Dichtung 3 ein aus den Teilen 4 und 5 zusammengesetzter Dichtring verwendet. Dabei bildet die innere Oberfläche (ringförmig) die erste Dichtfläche 7, also radial zur Welle 1 und läßt zwischen sich den engen Spalt 8 und zum käfigartigen Teil 2 den Zwischenraum 13. Dieses Dichtringteil 4 ist von einem Metall-Mantel 5 umgeben, der, um die Masse zu verringern und damit ein günstiges Trägheitsmoment aufzuweisen, Kühlrippen 11, Noppen oder ähnliches an seiner Außenoberfläche aufweist. Diese Rippen dienen auch einer günstigen Wärmeabfuhr von dem Dichtring.

Der Mantel 5, z. B. ein Titanmantel oder eine Titanlegierung oder ein Stahlmantel oder eine Stahllegierung, Aluminium oder Aluminiumlegierung oder Magnesium oder Berilium oder ein anderer hochfester, dehnbarer metallischer Werkstoff ist z. B. aufgeschrumpft, aufgepreßt oder ähnlich befestigt auf den Dichtring 4 aus Glas, Hohlenstoff, Kunststoff Keramik oder ebenfalls einer hochfesten Menge im termischen, ausdehnungskoeffizienten, abgestimmten Metallegierungen. Bei der Abstimmung des Mantelwerkstoffs ist der Werkstoff und/oder der Verbund so gewählt, daß bei höherwerdenden Betriebstemperaturen zentripedalwirkende Kräfte auf den Dichtring 4 einwirken.

Der Ring 4 oder die Dichtung 3 kann auch als Verbundwerkstoff aus zwei oder mehreren Komponenten bestehen (Hybridverbund), insbesondere aus einem Faserverbundwerkstoff, einem Whiskerverbundwerkstoff, einem Teilchenverbundwerkstoff oder einem Schichtverbundwerkstoff, wobei die Schicht oder ein Grundwerkstoff die Matrix bildet. Dabei hat es sich bewährt, wenn der Dichtring 4 aus glasartigem Kohlenstoff, Glaskeramik, Quarzglas oder Keramik wie Carbid, Nitrid, Oxid, ein Hartwerkstoff oder Diamant, das Ringteil 5 kohlenstoffaserverstärkt ist, glasfaserverstärkt ist, kunststoffaserverstärkt ist, borfaserverstärkt wurde, keramikfaserverstärkt. Als Matrix, wie Schicht oder Grundwerkstoff oder Einbettwerkstoff kann auch ein Metall, eine Metallegierung oder eine Metallverbindung gewählt werden, insbesondere von Titan, Aluminium, Nickel, Eisen, Kobalt auch mit anderen, geringeren, metallischen Bestandteilen als Zusätzen. Gut bewährt haben sich Keflar- bzw. aromatische Polyamid- bzw. Aramidfasern und Glasfasern, Kunststoffasern, Bor, Keramikfasern, sowohl whiskerartig als auch in fadenform und als Gewebe oder Gelege oder als Matter ausgebildet bzw. angeordnet sind. Die Fasern können einzeln oder als Verband oder Wicklung (Umfangswicklung) vakuummetallisiert sein, mit Kunststoff oder Glas oder Kohlenstoff imprägniert sein. Von Vorteil sind Ähnlichkeitsverbunde z. B. Siliziumfasern in SIC-Keramik oder SIC in SIC oder glasfaserverstärktes Glas oder Glaskeramik oder Aramidfasern oder $AL_2O_3$ in Aluminiummatrix oder Kohlenstoffaserverstärkter Kohlenstoff, glasfaserstärkter Kunststoff (Kunststoffe immer für niedrige Temperatur), E-Glas, S-Glas, Quarz-Glas ebenso wie Bor, Borcarbid, Siliziumcarbid Aluminiumoxid und andere Keramikfasern im Metall- oder Keramikmatrix für höhere Anwendungstemperaturen.

Auch Metallkeramiken (Cermets) oder Metall-/Glas-Verbundwerkstoffe, Glasmetalle, glasierte Metalle, emaillierte Metalle o. ä. oberflächlich normalerweise glatte und/oder reibungsarme Werkstoffe oder -Verbindungen und/oder -Paarungen sind geeignet auch in Oberflächenbereichen, z.B. mittels Hochenergiestrahlen implantierte, Ionen-implantierte, physikalisch oder chemisch implantierte Partikel, damit dotierte oder ähnlich verbesserte oberflächenvergütete Schichtverbundbereiche sind anwendbar.

Zusätzlich kann der höher temperaturfeste Ring 4 aus insbesondere auf die Welle 1 in sich seines thermischen Ausdehnungskoeffizienten TAC abgestimmtem Werkstoff (im allgemeinen recht spröde) oder Verbundkörper an einem Metall 5 als elastischen Ring umgeben und gehalten sein. Hier empfiehlt sich nach Betriebstemperatur und Betriebsdrehzahl den Ring 5 zu wählen.

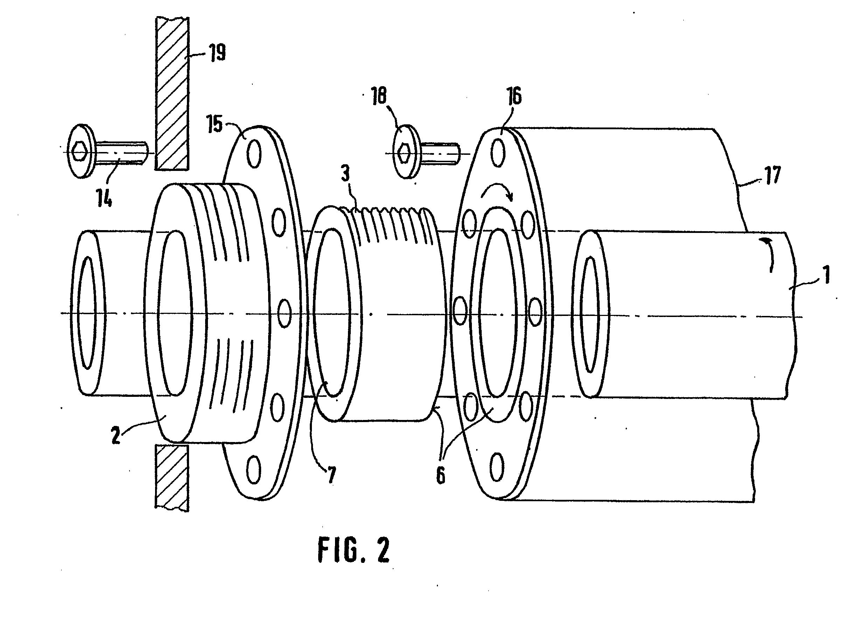

Ein anderes Ausführungsbeispiel der Erfindung ist in Fig. 2 dargestellt. Die Darstellungsart ist perspektivisch und rein schmatisch um das Wirkprinzip der Erfindung zu verdeutlichen. Dabei ist wiederum wie in Fig. 1 von links einwirkend ein Differenzdruck (Delta p) der sich ergibt aus einem Gasdruck P1, der größer ist als P2 der in dieser Figur rechts hier mit der Atmosphäre in Verbindung stehenden Luft.

Gleiche Teile sind mit gleichen Bezugszeichen versehen. Dabei ist die Dichtung 3 aus dem kombinierten Dichtring mit den Teilen 4 und 5 zusammengesetzt. Infolge der Expolosionsdarstellung der Figur 2 ist Teil 3 zwischen dem Käfig 2 und seinem Gegenstück 16 angeordnet. Dieses Gegenstück 16 ist scheibenartig insbesondere als flacher Ring ausgebildet und angeflanscht an die äußere Welle 17. Die äußere Welle 17 rotiert gemäß Figur 2 gegensinnig zur inneren Welle 1 und überträgt ein Reibmoment an der axialen Dichtfläche 6 auf die Dichtung 3 und nimmt diese in ihrer Drehrichtung mit - wie dargestellt im Uhrzeigersinn, während die Welle 1 im Gegenuhrzeigersinn rotiert. Bei der Ausführung nach Figur 2 kann der Käfig mit der inneren Welle 1 im Gegenuhrzeigersinn rotieren, wird jedoch mit Vorteil von den Schrauben 18 an einer Wand eines Gehäuses 19 festgehalten.

Selbstverständlich kann die Anordnung auch so getroffen werden, daß die Wand 19 des Gehäuses rechts neben dem Käfig steht und die äußere Welle 17 sich von links über den Außendurchmesser des Käfigs 2 (ohne den Flansch 15) schiebt.

Auch bei dieser Variante der Erfindung können beide Wellen 1 und 17, d. h. die innere und die äußere Welle gleich oder entgegengesetzt rotieren. Die Mitnahme des Dichtrings erfolgt mittels des Reibmomentes an der axialen Dichtfläche 6, so daß eine Dichtung zwischen den Wellen, auch bei höheren Drehzahlen gewährleistet ist.

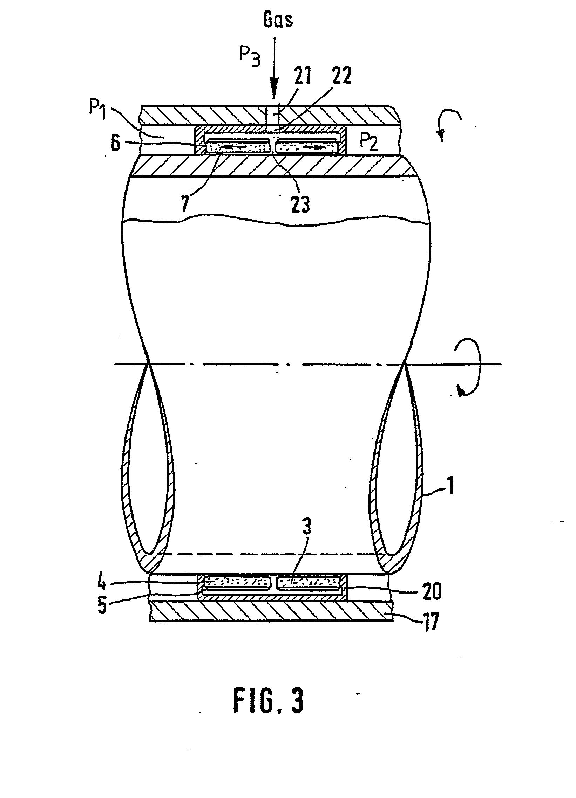

Ein weiter abgeändertes Ausführungsbeispiel der Erfindung ist in Figur 3 dargestellt. In Figur 3 sind insbesondere die innere Welle 1 und die äußere Welle 17 kontrarotierend und von einer Druckdifferenz Delta p eines Gases beaufschlagt, wobei P1 größer ist als P2 und sich das Gas zwischen den Wellen 1 und 17 (umfangsseitig) befindet. Die Druckdifferenz Delta p kann jedoch sehr klein sein und das Gas darf unter Umständen auch nicht in kleinsten Lekagen nach Außen gelangen.

Deshalb ist bei dem Ausführungsbeispiel nach Figur 3 eine geteilte Ausführung der Dichtung 3 in einem gemeinsamen Käfig 20 nach Art eines omegaförmigen Käfigs gewählt, wobei durch einen Gaskanal oder -spalt 21 in der äußeren Welle 17 oder zwischen zwei längsgeteilten Enden von Teilen dieser Welle 17 ein Gas, wie Argon, Helium, Stickstoff oder dergleichen unter einem Druck P3 gesteuert einführbar ist in die Kanäle 21, 22 und 23, um die Dichtung 3 im Betrieb, insbesondere den Dichtring 4 möglichst frühzeitig abzuheben und auf einem Gaskissen zu lagern, wie bei den Beispielen der Ausführungen der Figuren 1 und 2, jedoch so gesteuert, daß P3 größer gewählt ist als die Druckdifferenz Delta p von P1 und P2, der beidseitig der Dichtung zwischen innerer 1 und äußerer Welle 17 herrscht. Der Druck P3 kann dabei nahezu beliebig groß gewählt werden, um jegliche Lekagen nach außen zu unterbinden und damit auch Explosionsgefahren, was unter anderem wichtig ist bei Anwendungen der Erfindung für die chemische Industrie oder für die Reaktorindustrie. Dies ist auch wichtig bei der Anwendung in Turbomolekularpumpen, z.B. für die Raumfahrt oder bei der Anwendung auf Zentrifugalkompressoren, z.B. für die Erdölindustrie.

Besonders bewährt haben sich Gebläse für Heliumgas in Kernenergieanlagen, die bei hoher Betriebssicherheit in Ausführung nach Figur 3 fernsteuerbar sind. Außerdem bewährt hat sich die Erfindung bei den Expansionturbinen für Luftverflüssigungsanlagen, die bei hoher Drehzahl und tiefer Temperatur arbeiten müssen und bei Abdichtungen und Lagerungen von Wellen für große Turbomaschinen, insbesondere Turbogeneratoren, wobei von Vorteil ist, daß die erfindungsgemäße Ausbildung und Anordnung der Dichtung nicht nur hochtourig und bei hohen Temperaturen anwendbar ist, sondern auch wirtschaftlich und präzise herstellbar ist, dies gilt auch bei Anwendungen für Werkzeugmaschinen mit rotierenden Antrieben von Werkzeugen oder Werkstücken. Dabei ist ein weiterer Vorteil die Schwingungsunempfindlichkeit und damit präzise Führung und Lagerung der Dichtungen und daß sie wegen ihres Gaskissens und dynamischen Verhaltens im Betrieb praktisch ohne Verschleiß arbeitet.

Bezugszeichenliste

1. Welle (innen)
2. Feststehendes oder drehbares Teil
3. Dichtung
4. Dichtring
5. Äußerer Ring
6. Dichtfläche (axial)
7. Dichtfläche (radial)
8. Gaslager
9. Kühlbohrungen
10. Kühlrippen
11. Fischgrätenmuster
12. Spalt
13. Zwische nraum
14. Schrauben
15. Flansch
16. Gegenstück ( zu 3)
17. Welle (außen)
18. Schrauben
19. Gehäuse
20. Käfig für geteilte Dichtung (3)
21. Gaskanal oder -spalt (in 17)
22. Gaskanal (in 2)
23. Gaskanal oder -spalt (in 3)

Patentansprüche

1. Dichtung zwischen rotierenden Maschinenteilen mit einem Dichtring (4), der eine Welle (1) derart umgibt, daß zwischen Welle und Ring ein enger Spalt (12) gebildet ist, in dem (bei 8) sich im Betrieb ein tragfähiges Gaskissen ausbildet, und der Dichtring in einem käfigartigen Teil (2) frei beweglich angeordnet ist und unter Gasdruck gegen eine radiale Dichtfläche (7) gedrückt wird, dadurch gekennzeichnet, daß der Dichtring (4) einen außen aufgeschrumpften Metallring (5) trägt und aus einem Material gleichen oder kleineren thermischen Ausdehnungskoeffizienten gewählt ist als dasjenige der Welle (1) und des Metallrings (5).

2. Dichtung nach Anspruch 1, dadurch gekennzeichnet, daß der Dichtring (4) aus einem Material besteht, mit dem sowohl axiale als auch radiale Toleranzen im Betrieb aufgefangen bzw. ausgeglichen werden.

3. Dichtung nach Anspruch 1 oder 2, dadurch gekennzeichnet, daß der Dichtring (4) wenigstens an den der Welle (1) zugekehrten Oberflächenbereichen aus einem Material mit guten Gleiteigenschaften besteht bzw. hiermit versehen ist.

4. Dichtung nach einem der vorhergehenden Ansprüche, dadurch gekennzeichnet, daß der Dichtring (4) ausgewählt ist aus einem Material aus der Gruppe Glas, Kunststoff, Kohlenstoff, Metall, Keramik oder aus einem Verbundwerkstoff mit einem oder mehreren dieser Materialien.

5. Dichtung nach Anspruch 4, dadurch gekennzeichnet, daß der Verbundwerkstoff zwei oder mehrere Komponenten enthält, wovon eine teilchenförmig, faserförmig oder schichtförmig insbesondere als Oberflächenschicht ausgebildet ist.

6. Dichtung nach Anspruch 4, dadurch gekennzeichnet, daß wenigstens ein Außenbereich des Dichtrings (4) aus Glas, Kunststoff, Metall, Keramik oder einem Verbundwerkstoff mit wenigstens einem dieser Materialien verstärkt ist durch Teilchen, Whisker, Fasern, Fadenwicklungen, Gewebe, Geläge durch Einlagern, Einbetten, Imprägnieren, Eingießen, Einpressen, Einbringen, Aufbringen oder Niederschlagen.

7. Dichtring nach einem der vorhergehenden Ansprüche, dadurch gekennzeichnet, daß der Metallring (5) an seinem Umfang Rippen (10), Noppen oder dergleichen Oberflächenvergrößerungs- und Massenverringerungselemente aufweist.

8. Dichtung nach einem der vorhergehenden Ansprüche, dadurch gekennzeichnet, daß der Dichtring (4) kühlbar ist über Durchbrüche (9) am Umfang des käfigartigen Teils (2).

9. Dichtung nach einem der vorhergehenden Ansprüche, dadurch gekennzeichnet, daß Welle (1) und Dichtring (4) aus Materialien ausgewählt sind, die eine verschleißgünstige Paarung bilden.

10. Dichtung nach Anspruch 8, dadurch gekennzeichnet, daß auf der Welle (1) oder im Dichtring (4) vorzugsweise im verschleißärmeren Teil ein Muster von Vertiefungen (11) unter einem Winkel zur Drehachse angeordnet ist.

11. Dichtung nach Anspruch 10, dadurch gekennzeichnet, daß das Muster der Vertiefungen (11) fischgrätenartig ausgebildet ist, und welches dem an der Wellenoberfläche in den Spalt (12) eindringenden, unter Druck stehenden Gas entgegenwirkt.

12. Dichtung nach Anspruch 1 oder einem anderen der vorhergehenden Ansprüche, daß sie zwischen einer inneren Welle (1) und einer äußeren Welle (17) angeordnet sind.

13. Dichtung nach Anspruch 12, dadurch gekennzeichnet, daß die innere und die äußere Welle (1, 17) kontrarotierend sind.

14. Dichtung nach Anspruch 12 oder 13, dadurch gekennzeichnet, daß der käfigartige Teil (2) zwischen der inneren Welle (1) und der äußeren Welle (17) feststehend angeordnet ist oder mittels Verbindungselementen (14, 18) z.B. über Flansche (15, 16) mit der äußeren Welle (17) verbunden ist.

15. Dichtung nach Anspruch 1, dadurch gekennzeichnet, daß eine axiale Dichtfläche (6) an einem Flansch (16) angeordnet ist, die mit einer Stirnseite der Dichtung (3) in axialer Richtung korrespondiert, welche in dem käfigartigen Teil (2) angeordnet ist, und wobei die Dichtung (3) über das an der Dichtfläche (6) wirkende Reibmoment mitgenommen wird von der äußeren Welle (17).

16. Dichtung nach Anspruch 1 oder einem anderen der vorhergehenden Ansprüche, dadurch gekennzeichnet, daß die Dichtung geteilt ist, insbesondere die Ringe (4, 5) über ihre Axiallänge einmal geteilt sind, insbesondere hälftig, wobei die Teilungslinie am Umfang umläuft.

17. Dichtung nach Anspruch 1, dadurch gekennzeichnet, daß die Teilungslinie der Dichtung zugleich der Zufuhr eines Gases durch Bohrungen (21) und (22) dient, um ein tragfähiges Gaskissen im Betrieb auszubilden.

18. Dichtung nach Anspruch 14, dadurch gekennzeichnet, daß der käfigartige Teil (2) feststeht und die äußere Welle (17) im Bereich der Bohrungen (21, 22, 23) getrennt ist und die Bohrung (21) durch einen engen Spalt ersetzt ist.

19. Dichtung nach einem der Ansprüche 1 bis 18, dadurch gekennzeichnet, daß sowohl der inneren Welle (1) als auch der äußeren Welle (17) und deren Teilen eigene Lager zugeordnet sind.

20. Dichtung nach einem der Ansprüche 1 bis 19, dadurch gekennzeichnet, daß das käfigartige Teil (2) nach Art und in der Größenordnung eines Lagerkäfigs ausgebildet ist.

21. Dichtung nach einem der Ansprüche 1 bis 14, dadurch gekennzeichnet, daß das Gas, das durch wenigstens eine der Bohrungen (21) bis (23) dem geteilten Dichtring (4) zugeführt wird, ein Inert-Gas, insbesondere ein Edelgas ist.

22. Dichtung nach Anspruch 1, dadurch gekennzeichnet, daß der Druck des zugeführten Gases P3 größer als der Differenzdruck P von P1 zu P2 im Spalt beidseitig der Dichtung ist.

**Revendications**

1. Joint entre des éléments tournants de machine avec une bague d'étanchéité (4), qui entoure un arbre (1) de façon que, entre arbre et bague, soit formé un jeu étroit (12), dans lequel (en 8) se forme en marche un coussin de gaz porteur, et la bague d'étanchéité est disposée libre de se déplacer dans une pièce (2) de type cage et est pressée contre une surface d'étanchéité (7) radiale sous pression de gaz, caractérisé en ce que la bague d'étanchéité (4) porte un anneau métallique (5) fretté extérieurement et est choisie dans un matériau à coefficient de dilatation thermique égal ou inférieur à celui de l'arbre (1) et de l'anneau métallique (5).

2. Joint selon la revendication 1, caractérisé en ce que la bague d'étanchéité (4) est composée d'un matériau, avec lequel des tolérances aussi bien axiales que radiales sont absorbées ou compensées en marche.

3. Joint selon l' une ou l'autre des revendications 1 ou 2, caractérisé en ce que la bague d'étanchéité (4) au moins dans les zones des surfaces adjacentes à l'arbre (1) se compose d'un matériau avec de bonnes propriétés de glissement ou en est doté.

4. Joint selon l'une quelconque des revendications précédentes, caractérisé en ce que, la bague d'étanchéité (4) est choisie dans un matériau du groupe verre, matière plastique, carbone, métal, céramique ou dans une matière composite avec un ou plusieurs de ces matériaux.

5. Joint selon la revendication 4, caractérisé en ce que la matière composite contient deux ou plusieurs composants, dont un est réalisé sous forme de particules, sous forme de fibres ou sous forme de strates en particulier comme couche de surface.

6. Joint selon la revendication 4, caractérisé en ce que au moins une zone extérieure de la bague d'étanchéité (4) en verre, matière plastique, métal, céramique ou une matière composite avec au moins un de ces matériaux est renforcée par des particules, barbes, fibres enroulements de fils, tissus, charges par dépôt, enrobage, imprégnation, scellage, empreinte, introduction, apport ou condensation.

7. Bague d'étanchéité selon l'une des revendications précédentes, caractérisée en ce que l'anneau métallique (5) comporte à sa périphérie des rainures (10), des nopes ou éléments similaires d'agrandissement de surface et de diminution de masse.

8. Joint selon l'une quelconque des revendications précédentes, caractérisé en ce que la bague d'étanchéité (4) peut être refroidie par des ouvertures (9) à la périphérie de la pièce en forme de cage (2).

9. Joint selon l'une quelconque des revendications précédentes, caractérisé en ce que l'arbre (1) et la bague d'étanchéité (4) sont choisis en matériaux, qui forment un couple favorable pour l'usure.

10. Joint selon la revendication 8, caractérisé en ce que sur l'arbre (1) ou dans la bague d'étanchéité (4) est disposé avantageusement dans une partie plus pauvre en usure un modèle de creux (11) faisant un certain angle par rapport à l'axe de rotation.

11. Joint selon la revendication 10, caractérisé en ce que le modèle de creux (11) est formé à la façon d'arêtes de poisson et agit contre le gaz se trouvant sous pression, pénétrant dans le jeu (12) à la surface de l'arbre.

12. Joint selon la revendication 1 ou une quelconque des revendications précédentes, caractérisé en ce que il est placé entre un arbre intérieur (1) et un arbre extérieur (17).

13. Joint selon la revendication 12, caractérisé en ce que l'arbre intérieur et l'arbre extérieur (1, 17) tournent en sens inverse.

14. Joint selon l'une ou l'autre des revendications 12 ou 13, caractérisé en ce que la pièce (2) de type cage est placée fixe entre l'arbre intérieur (1) et l'arbre extérieur (17) ou bien est reliée à l'arbre extérieur (17) au moyen d'éléments de jonction (14, 18) par exemple sur des flasques (15, 16).

15. Joint selon la revendication 1, caractérisé en ce que une surface d'étanchéité axiale (6) est disposée contre un flasque (16), surface qui correspond à une face frontale du joint (3) dans le sens de l'axe, joint qui est disposé dans une pièce (2) de type cage et se trouve entraîné par l'arbre extérieur (17) par l'intermédiaire du couple de friction agissant sur la surface d'étanchéité (6).

16. Joint selon la revendication 1 ou l'une quelconque des revendications précédentes, caractérisé en ce que le joint est divisé, en particulier les anneaux (4, 5) sont divisés une fois sur leur longueur axiale, principalement par moitié, la ligne de séparation allant vers la périphérie.

17. Joint selon la revendication 1, caractérisé en ce que la ligne de séparation du joint sert en même temps à l'amenée d'un gaz par les trous (21) et (22), pour créer un coussin de gaz porteur pendant la marche.

18. Joint selon la revendication 14, caractérisé en ce que la pièce (2) du type cage est fixe et l'arbre extérieur (17) est séparé dans la zone des trous (21, 22, 23) et le trou (21) est remplacé par un espace étroit.

19. Joint selon l'une quelconque des revendications 1 à 18, caractérisée en ce que des coussinets propres sont attribués aussi bien à l'arbre intérieur (1) que également à l'arbre extérieur (17) et à ses éléments.

20. Joint selon l'une quelconque des revendications 1 à 14, caractérisé en ce que le gaz, qui par au moins un des trous (21) à (23) est amené à la bague d'étanchéité (4) divisée, est un gaz inerte, en particulier un gaz rare.

21. Joint selon l'une des revendications 1 à 19, caractérisé en ce que la pièce (2) du type cage est réalisée à la façon et à la dimension d'une cage de palier.

22. Joint selon la revendication 1, caractérisé en ce que, la pression du gaz introduit P₃ est plus grande que la différence de pression P entre P₁ et P₂ dans l'espace des deux côtés du joint.

**Claims**

1. A seal between rotating machine parts and comprising a packing ring (4) which so surrounds a shaft (1) that a narrow gap (12) is formed between the shaft and ring in which (at 8) a supportable cushion of gas is formed during operation, the packing ring being disposed to be freely movable in a cage-like part (2) and being forced by gas pressure against a radial sealing surface (7), characterised in that the packing ring (4) carries a metal ring (5) which is shrunk onto it externally, the packing ring (4) consisting of a material having the same or a lower coefficient of heat expansion than the material used for the shaft (1) and the metal ring (5).

2. A seal according to claim 1, characterised in that the packing ring (4) consists of a material capable of absorbing or compensating for both axial and also radial tolerances in operation.

3. A seal according to claim 1 or 2, characterised in that at least on those areas of its surface which are towards the shaft (1), the packing ring (4) consists of or is provided with a material having good sliding properties.

4. A seal according to one of the preceding claims, characterised in that the packing ring (4) is chosen from a material taken from the group comprising glass, synthetic plastics, carbon, metal, ceramic or a bonded material containing one or more of these materials.

5. A seal according to claim 4, characterised in that the bonded material contains two or a plurality of components of which one is particulate, fibrous or laminar, and is in particular the surface layer.

6. A seal according to claim 4, characterised in that at least one outer region of the packing ring (4) consists of glass, synthetic plastics, metal, ceramic or a composite material containing at least one of these materials, reinforced by particles, whiskers, fibres, filaments, woven materials, and sedimented substances by inclusion, embedding, impregnation, integral casting, impressing, incorporating, application or deposition.

7. A packing ring according to one of the preceding claims, characterised in that the metal ring (5) has on its periphery ribs (10), knobs or similar surface enlarging and mass diminishing elements.

8. A seal according to one of the preceding claims, characterised in that the packing ring (4) can be cooled via apertures (9) on the periphery of the cage-like part (2).

9. A seal according to one of the preceding claims, characterised in that shaft (1) and packing ring (4) are chosen from materials which form a pairing having favourable wearing properties.

10. A seal according to claim 8, characterised in that on the shaft (1) or in the packing ring (4), preferably in the part which is less subject to wear and tear, there is a pattern of depressions (11) at an angle to the axis of rotation.

11. A seal according to claim 10, characterised in that the pattern of depressions (11) is in a herringbone design and counteracts the pressurised gas penetrating the gap (12) at the surface of the shaft.

12. A seal according to claim 1 or another of the preceding claims, characterised in that is disposed between an inner shaft (1) and an outer shaft (17).

13. A seal according to claim 12, characterised in that the inner and outer shafts (1, 12) are contra-rotating.

14. A seal according to claim 12 or 13, characterised in that the cage-like part (2) is rigidly disposed between the inner shaft (1) and the outer shaft (17) or is connected to the outer shaft (17) by means of connecting elements (14, 18), e.g. flanges (15, 16).

15. A seal according to claim 1, characterised in that an axial sealing surface (6) is disposed on a flange (16) and corresponds in an axial direction to an end face of the seal (3) which is disposed in the cage-like part (2), the seal (3) being entrained by the outer shaft (17) by virtue of the friction acting on the sealing surface (6).

16. A seal according to claim 1 or other of the preceding claims, characterised in that the seal is divided, particularly in that the rings (4, 5) are divided once over their axial length, particularly being divided into halves, the line of division encircling the periphery.

17. A seal according to claim 1, characterised in that the line of division of the seal serves at the same time to feed a gas through bores (21) and (22) in order to form a supportable cushion of gas in operation.

18. A seal according to claim 14, characterised in that the cage-like part (2) is fixed while the outer shaft (17) is separated in the region of the bores (21, 22, 23) the bore (21) being replaced by a narrow gap.

19. A seal according to one of claims 1 to 18, characterised in that both the inner shaft (1) and also the outer shaft (17) and their parts have their own respective bearings.

20. A seal according to one of claims 1 to 19, characterised in that the cage-like part (2) is constructed in the manner and to the overall size of a bearing cage.

21. A seal according to one of claims 1 to 14, characterised in that the gas which is fed through at least one of the bores (21) to (23) to the divided packing ring (4) is an inert gas, particularly a noble gas.

22. A seal according to claim 1, characterised in that the pressure of the supplied gas P3 is greater than the differential pressure P of P1 to P2 in the gap on either side of the seal.

FIG. 1

FIG. 2

EP 0 243 791 B1

FIG. 3